# EUROPEAN PATENT SPECIFICATION

(11) **EP 3 559 909 B1**
(45) Date of publication and mention of the grant of the patent: **26.11.2025**
(21) Application number: 17828710.8
(22) Date of filing: 19.12.2017
(51) Int. Cl.: G06T 7/30

(54) **A METHOD AND APPARATUS FOR POSITIONING MARKERS IN IMAGES OF AN ANATOMICAL STRUCTURE**
VERFAHREN UND VORRICHTUNG ZUR POSITIONIERUNG VON MARKERN IN BILDERN EINER ANATOMISCHEN STRUKTUR
PROCÉDÉ ET APPAREIL DE POSITIONNEMENT DE REPÈRES DANS DES IMAGES D'UNE STRUCTURE ANATOMIQUE

(30) Priority: 22.12.2016 EP 16206056
(43) Date of publication of application: 30.10.2019
(73) Proprietor: Koninklijke Philips N.V., 5656 AG Eindhoven (NL)
(72) Inventor: KABUS, Sven, 5656 AE Eindhoven (NL)
(74) Representative: Philips Intellectual Property & Standards
(86) International application number: PCT/EP2017/083447
(87) International publication number: WO 2018/114889

(56) References cited:
- EP-A1- 2 194 486
- WO-A1-2005/048844
- WO-A1-2013/023073
- US-A1- 2014 294 263

## Description

### TECHNICAL FIELD OF THE INVENTION

The invention relates to the field of medical imaging and, in particular, to a method and apparatus for positioning markers in images of an anatomical structure.

### BACKGROUND TO THE INVENTION

Medical imaging is a useful tool for providing visual representations of anatomical structures (for example, organs) in images. There exist many different types of medical imaging techniques including computed tomography (CT), magnetic resonance (MR), ultrasound (US), X-ray, and similar. The images acquired from medical imaging are processed and analysed to make clinical findings on a subject and to determine whether medical intervention is necessary.

For many image processing and image analysis algorithms, ground-truth is required for the accurate evaluation of images and clinical validation and also for optimising, tuning, and analysing the algorithms. In the case of multiple images, it is often necessary to bring the images into correspondence (or alignment) for clinical analysis. For any kind of alignment, registration, fusion, matching, motion estimation or motion compensation framework, the most common way to enable ground-truth is to use markers to indicate the features (or landmarks) of the anatomical structures in the images. By using markers, the same anatomical position can be marked in two or more images so that the images can be directly compared. Also, the markers can be used to validate computed displacement vectors to identify target registration errors.

In order to accurately bring images into correspondence (or alignment) for clinical analysis, the markers need to be positioned in the images with high precision and this is difficult to achieve. Annotation tools allow for the positioning of markers, typically by selecting a position on a voxel or in-between voxels in the case of three-dimensional images. However, even where markers are positioned in-between voxels, it is a challenge for the user to combine the information from two different images in their mind in order to define corresponding markers with high accuracy. The complexity of this is further increased due to pathologies, different acquisition modalities or protocols, artefacts, or different noise levels.

Often, a feature of an anatomical structure that is of diameter equal to or less than the size of a voxel (for example, a filigree structure such as a vessel bifurcation or a lung vessel close to the pleura) is shown in a first image by a single bright voxel, but is shown in a second image by two less bright voxels (due to the partial volume effect, e.g. the feature may be spread over two voxels in the second image). A mismatch in a single spatial dimension can be relatively easily compensated by annotating a position in the voxel centre in the first image and a position shifted by half a voxel in the second image. However, a mismatch in more than one dimension is typically challenging to compensate and can be a time-consuming and error-prone task for the user. Thus, even with the existing tools to assist with the positioning of markers on features of anatomical structures in images, which allow markers to be placed in-between voxels, it is challenging (if not impossible) for a user to accurately mark the position of corresponding features in two or more images.

WO 2005/048844 discloses a method for estimating a position of two features of an anatomical structure. Specifically, the position of anterior commissure (AC) and posterior commissure (PC) landmarks are estimated in an image based on pixel intensities. In the disclosed method, two sub-images are generated from the image as regions of interests (ROIs) respectively around the estimated positions of the AC and PC landmarks and the sub-images are analysed to improve the estimated positions. However, while this method can be used to more accurately position markers on features in a single image, it is still not possible to ensure that the positon of the marker on the same feature in another image is consistent to aid a user in clinical analysis.

There is thus a need for an improved method and apparatus for positioning markers in images of an anatomical structure.

### SUMMARY OF THE INVENTION

As noted above, the limitation with existing approaches is that it is not possible to accurately mark the position of corresponding features in two or more images. It would thus be valuable to have a method and apparatus that can position markers in images of an anatomical structure in a manner that overcomes these existing problems.

Therefore, according to a first aspect of the invention, there is provided a method for positioning markers in images of an anatomical structure. The method comprises positioning a first marker over a feature of an anatomical structure in a first image and a second marker over the same feature of the anatomical structure in a second image, and translating the first image under the first marker to adjust the position of the first marker with respect to the feature of the anatomical structure in the first image to correspond to the position of the second marker with respect to the feature of the anatomical structure in the second image.

In some embodiments, translating the first image may comprise an interpolation of the first image. In some embodiments, translating the first image may comprise any one or more of translating the first image in a left-right direction, translating the first image in an anterior-posterior direction, and translating the first image in an inferior-superior direction. In some embodiments, the first image may be a two-dimensional image comprising a plurality of pixels and translating the first image may comprise translating the first image by part of a pixel or the first image may be a three-dimensional image comprising a plurality of voxels and translating the first image may comprise translating the first image by part of a voxel. In some embodiments, the first image may be translated continuously under the first marker.

In some embodiments, the first image may be translated under the first marker in a plurality of steps. In some embodiments, translating the first image under the first marker may comprise translating the first image under the first marker in the plurality of steps to acquire a plurality of translated first images, for each of the plurality of translated first images, comparing the position of the first marker with respect to the feature of the anatomical structure in the translated first image to the position of the second marker with respect to the feature of the anatomical structure in the second image, and selecting a translated first image from the plurality of translated first images for which the position of the first marker with respect to the feature of the anatomical structure most closely corresponds to the position of the second marker with respect to the feature of the anatomical structure in the second image.

In some embodiments, one or more of the positioning of the first marker and the translation of the first image under the marker may be at least partially based on a received user input.

In some embodiments, the method may further comprise translating the second image under the second marker to adjust the position of the second marker with respect to the feature of the anatomical structure in the second image to correspond to the position of the first marker with respect to the feature of the anatomical structure in the first image.

In some embodiments, the method may further comprise rotating the first image under the first marker to alter the orientation of the anatomical structure in the first image to correspond to the orientation of the anatomical structure in the second image.

In some embodiments, each of the first image and the second image may comprise a plurality of views of the anatomical structure and the method disclosed herein may be performed for one or more of the plurality of views of the anatomical structure. In some embodiments, the plurality of views of the anatomical structure may comprise any one or more of an axial view of the anatomical structure, a coronal view of the anatomical structure, and a sagittal view of the anatomical structure.

According to a second aspect of the invention, there is provided a computer program product comprising a computer readable medium, the computer readable medium having computer readable code embodied therein, the computer readable code being configured such that, on execution by a suitable computer or processor, the computer or processor is caused to perform the method or the methods described above.

According to a third aspect of the invention, there is provided an apparatus for positioning markers in images of an anatomical structure. The apparatus comprises a processor configured to position a first marker over a feature of an anatomical structure in a first image and a second marker over the same feature of the anatomical structure in a second image, and translate the first image under the first marker to adjust the position of the first marker with respect to the feature of the anatomical structure in the first image to correspond to the position of the second marker with respect to the feature of the anatomical structure in the second image.

In some embodiments, the processor may be configured to control a user interface to render the translated first image with the first marker and the second image with second marker and/or control a memory to store the translated first image with the first marker and the second image with second marker.

According to the aspects and embodiments described above, the limitations of existing techniques are addressed. In particular, according to the above-described aspects and embodiments, it is possible to accurately mark the position of corresponding features in two or more images. A user tasked with clinically analysing the images is no longer required to combine or overlay the information from the two or more images in their mind. In this way, the aspects and embodiments described above allow markers to be positioned over corresponding features in different images with high precision.

There is thus provided an improved method and apparatus for positioning markers in (or annotating) images of an anatomical structure, which overcomes the existing problems.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of an apparatus according to an embodiment;
Figure 2 is a flow chart illustrating a method according to an embodiment;
Figure 3 is an illustration of markers in images of an anatomical structure according to an embodiment;
Figure 4 is a flow chart illustrating a method according to an embodiment; and
Figure 5 is an illustration of markers in images of an anatomical structure according to an embodiment.

### DETAILED DESCRIPTION OF THE PREFERRED EMBODIMENTS

As noted above, the invention provides an improved method and apparatus for positioning markers in (or annotating) images of an anatomical structure, which overcomes the existing problems.

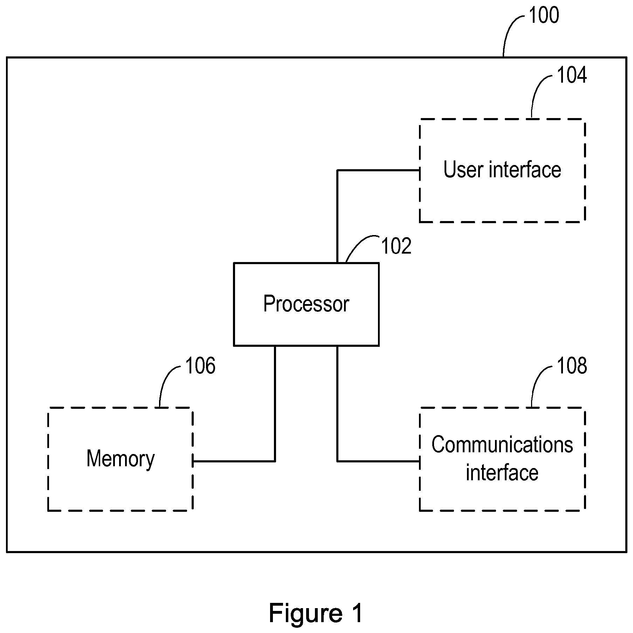

Figure 1 shows a block diagram of an apparatus 100 according to an embodiment that can be used for positioning markers in images of an anatomical structure.

The images of the anatomical structure can, for example, be medical images. Examples include, but are not limited to, computed tomography (CT) images, magnetic resonance (MR) images, ultrasound (US) images, X-ray images, fluoroscopy images, positron emission tomography (PET) images, single photon emission computed tomography (SPECT) images, nuclear medicine images, or any other medical images.

In some embodiments, the images of the anatomical structure may be two-dimensional images comprising a plurality of pixels. In some embodiments, the images of the anatomical structure may be a plurality of two-dimensional images, each comprising a plurality of pixels, where time is the third dimension (i.e. the images of the anatomical structure may be 2D+t images). In some embodiments, the images of the anatomical structure may be three-dimensional images comprising a plurality of voxels. In some embodiments, the images of the anatomical structure may be four-dimensional images comprising a plurality (for example, a series, such as a time series) of three-dimensional images, each three-dimensional image comprising a plurality of voxels. The anatomical structure in the images may be an organ such as a heart, a lung, an intestine, a kidney, a liver, or any other anatomical structure. The anatomical structure in the images can comprise one or more anatomical parts. For example, images of the heart can comprise a ventricle, an atrium, an aorta, and/or any other part of the heart.

Although examples have been provided for the type of images and for the anatomical structure (and the parts of the anatomical structure) in the images, it will be understood that the invention may also be used for positioning markers in any other type of images and the anatomical structure may be any other anatomical structure.

The apparatus 100 comprises a processor 102 that controls the operation of the apparatus 100 and that can implement the method described herein. The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method according to embodiments of the invention.

Briefly, the processor 102 is configured to position a first marker over a feature of an anatomical structure in a first image and a second marker over the same feature of the anatomical structure in a second image and translate the first image under the first marker to adjust the position of the first marker with respect to the feature of the anatomical structure in the first image to correspond to the position of the second marker with respect to the feature of the anatomical structure in the second image.

In some embodiments, the apparatus 100 may also comprise at least one user interface 104. Alternatively or in addition, at least one user interface 104 may be external to (i.e. separate to or remote from) the apparatus 100. For example, at least one user interface 104 may be part of another device.

A user interface 104 may be for use in providing a user of the apparatus 100 (for example, a healthcare provider, a healthcare specialist, a care giver, a subject, or any other user) with information resulting from the method according to the invention. The processor 102 may be configured to control one or more user interfaces 104 to provide information resulting from the method according to the invention. For example, the processor 102 may be configured to control one or more user interfaces 104 to render (or output or display) the translated first image with the first marker and the second image with second marker. Alternatively or in addition, a user interface 104 may be configured to receive a user input. In other words, a user interface 104 may allow a user of the apparatus 100 to manually enter instructions, data, or information. The processor 102 may be configured to acquire the user input from one or more user interfaces 104.

A user interface 104 may be any user interface that enables rendering (or output or display) of information, data or signals to a user of the apparatus 100. Alternatively or in addition, a user interface 104 may be any user interface that enables a user of the apparatus 100 to provide a user input, interact with and/or control the apparatus 100. For example, the user interface 104 may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, the apparatus 100 may also comprise a memory 106 configured to store program code that can be executed by the processor 102 to perform the method described herein. Alternatively or in addition, one or more memories 106 may be external to (i.e. separate to or remote from) the apparatus 100. For example, one or more memories 106 may be part of another device. A memory 106 can be used to store images, information, data, signals and measurements acquired or made by the processor 102 of the apparatus 100 or from any interfaces, memories or devices that are external to the apparatus 100. For example, a memory 106 may be used to store the translated first image with the first marker and the second image with second marker. The processor 102 may be configured to control a memory 106 to store the translated first image with the first marker and the second image with second marker.

In some embodiments, the apparatus 100 may also comprise a communications interface (or circuitry) 108 for enabling the apparatus 100 to communicate with any interfaces, memories and devices that are internal or external to the apparatus 100. The communications interface 108 may communicate with any interfaces, memories and devices wirelessly or via a wired connection. For example, in an embodiment where one or more user interfaces 104 are external to the apparatus 100, the communications interface 108 may communicate with the one or more external user interfaces 104 wirelessly or via a wired connection. Similarly, in an embodiment where one or more memories 106 are external to the apparatus 100, the communications interface 108 may communicate with the one or more external memories 106 wirelessly or via a wired connection.

It will be appreciated that Figure 1 only shows the components required to illustrate this aspect of the invention, and in a practical implementation the apparatus 100 may comprise additional components to those shown. For example, the apparatus 100 may comprise a battery or other power supply for powering the apparatus 100 or means for connecting the apparatus 100 to a mains power supply.

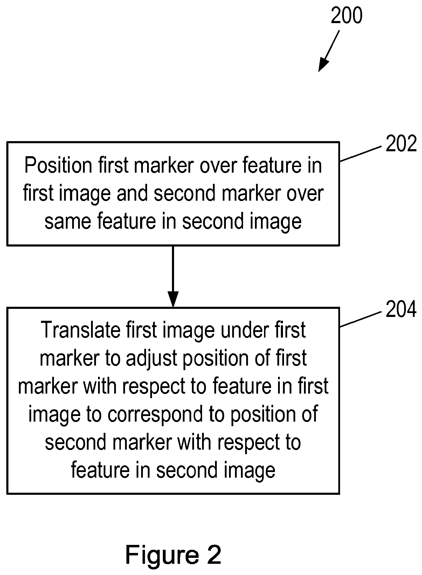

Figure 2 illustrates a method 200 for positioning markers in images of an anatomical structure according to an embodiment. The illustrated method 200 can generally be performed by or under the control of the processor 102 of the apparatus 100.

Although not illustrated in Figure 2, in some embodiments, a first image and a second image of the anatomical structure may be displayed on a user interface 104. The first image may be a baseline (or initial) image of the anatomical structure. The second image may be a follow-up (or subsequent) image of the anatomical structure, which can be taken at a later point in time to the first image. As mentioned earlier, in some embodiments, the first image and the second image may be two-dimensional images comprising a plurality of pixels. In other embodiments, the first image and the second image may be a plurality of two-dimensional images, each comprising a plurality of pixels, where time is the third dimension (i.e. the first image and second image may be 2D+t images). In other embodiments, the first image and the second image may be three-dimensional images comprising a plurality of voxels. In other embodiments, the first image and the second image may be four-dimensional images comprising a plurality (for example, a series, such as a time series) of three-dimensional images, each three-dimensional image comprising a plurality of voxels

In some embodiments, each of the first image and the second image may comprise a plurality of views of the anatomical structure. For example, the plurality of views of the anatomical structure can comprise any one or more of an axial view of the anatomical structure, a coronal view of the anatomical structure, a sagittal view of the anatomical structure, or any other view of the anatomical structure, or any combination of views of the anatomical structure. In some embodiments, the first image and the second image of the anatomical structure may be displayed on the user interface 104 in an orthogonal view manner. In embodiments where the first image and the second image comprise a plurality of views of the anatomical structure, the first image and the second image may be displayed on the user interface 104 in the plurality of views (for example, in six orthogonal views comprising the axial, coronal and sagittal views of each image).

With reference to Figure 2, at block 202, a first marker (or annotation) is positioned over a feature of an anatomical structure in the first image and a second marker is positioned over the same feature of the anatomical structure in the second image. This step serves as an initialisation step. The feature over which the first marker and the second marker are placed may comprise any feature (or landmark) of the anatomical structure. For example, the feature may comprise a vessel structure (such as a vessel bifurcation), a fissure, a position in or on a lesion or a tumour, a bone structure, or in general any distinct structure in an anatomical structure (which may be an organ, or any other anatomical structure) or a boundary of the anatomical structure, or any other feature of the anatomical structure.

In some embodiments, the positioning of the first marker and the second marker (at block 202 of Figure 2) can be performed automatically by the processor 102 of the apparatus 100. For this purpose, any suitable known algorithm can be used. For example, the algorithm may be a computer aided detection scheme (such as a Hessian-based analysis scheme, a radial gradient sampling scheme, an eigenvalue analysis scheme), or any other suitable algorithm. In some embodiments, the positioning of the first marker and the second marker can be at least partially based on a received user input. The user input may be received via one or more user interfaces 104, which may be one or more user interfaces of the apparatus 100, one or more user interfaces external to the apparatus 100, or a combination of both. For example, in some embodiments, the processor 102 may be configured to control one or more user interfaces 104 to display the first image and the second image to the user by and to acquire from one or more user interfaces 104 a user input to position or adjust a positon of one or more of the markers. In some embodiments, the user input may comprise the user clicking on a pixel in the case of two-dimensional images or clicking on a voxel in the case of three-dimensional images (or four-dimensional images comprising a plurality of three-dimensional images) to place a marker over a feature of the anatomical structure in both the first and second images. The processor 102 of the apparatus 100 may then be configured to determine the corresponding pixel or voxel position for those markers from the user input.

At block 204 of Figure 2, the first image is translated (e.g. shifted or transformed) under the first marker to adjust the position of the first marker with respect to the feature of the anatomical structure in the first image to correspond to the position of the second marker with respect to the feature of the anatomical structure in the second image. In this way, the underlying first image is modified by the translation, rather than the position of the first marker itself. The first marker remains fixed. The first image can be translated in any suitable manner. For example, the first image can be translated continuously under the first marker, translated under the first marker in a plurality of steps, or a combination of continuously and in a plurality of steps under the first marker. The translation of the first image under the first marker to adjust the position of the first marker with respect to the feature can ensure that the first marker is placed in a corresponding (or equivalent) position on the image to the second marker in the second image.

In some embodiments, translating the first image may comprise re-sampling the first image to a new set of coordinates. For example, re-sampling the values of each image component in the first image to a new set of image component co-ordinates (where the image components are pixels in the case of the image being a two-dimensional image or voxels in the case of the first image being a three-dimensional image).

In some embodiments, translating the first image can comprise an interpolation of the first image (e.g. the first image may be re-sampled by interpolating the values of the image components of the first image onto a new set of image component co-ordinates). The interpolation of the first image to translate the first image under the first marker can comprise any suitable interpolation technique. Examples of an interpolation technique that may be used include, but are not limited to, a linear interpolation, a polynomial interpolation (such as a cubic interpolation, a B-spline-based interpolation, or any other polynomial interpolation), a trilinear interpolation, or any other interpolation technique. In the embodiments in which the first image is translated under the first marker in a plurality of steps, the interpolation of the first image may be performed after each translation of the first image.

The translation of the first image can be in any direction. For example, translating the first image may comprise any one or more of translating the first image in a left-right direction, translating the first image in an anterior-posterior direction, translating the first image in an inferior-superior direction, or translating the first image in any other direction, or in any combination of directions.

In embodiments where the first image is a two-dimensional image comprising a plurality of pixels, translating the first image may comprise translating the first image by part of a pixel. In other words, the first image may be translated on a sub-pixel level. Similarly, in embodiments where the first image is a three-dimensional image (or a four-dimensional image comprising a plurality of three-dimensional images) comprising a plurality of voxels, translating the first image may comprise translating the first image by part of a voxel. In other words, the first image may be translated on a sub-voxel level. In embodiments where the first image is translated under the first marker in a plurality of steps, the step size can be a fraction of a pixel in the case of two-dimensional images or a fraction of a voxel in the case of three-dimensional images (or four-dimensional images comprising a plurality of three-dimensional images).

In an example embodiment, the first image may be translated by 0.2 of a voxel. However, although an example has been provided, it will be understood that other examples are also possible and the first image may be translated by any other fraction of a voxel (such as 0.1 of a voxel, 0.3 of a voxel, 0.4 of a voxel, 0.5 of a voxel, 0.6 of a voxel, or any other fraction of a voxel). In this way, even features having a diameter that is equal to or less than a voxel in the case of a three-dimensional image (or a four-dimensional image comprising a plurality of three-dimensional images), or a diameter that is equal to or less than a pixel in the case of two-dimensional images, can be accurately marked to achieve high precision alignment.

In some embodiments, the translation of the first image under the first marker (at block 204 of Figure 2) can be performed automatically by the processor 102 of the apparatus 100. For example, an automatic image registration algorithm can be employed. In some embodiments, for example, an automatic image registration algorithm may be applied to the first image and the second image (or to one or more sub-images of those images, where a sub-image shows the local environment around the position of a marker). An optimal translation can then be determined by comparing the first image and second image (or by mapping one of the images to the other). The optimal translation is a translation that, when applied to one of the images, makes the translated image and the other image most similar. For example, the optimal translation may produce a translated (e.g. re-sampled) image whereby anatomical features in the translated image are aligned with the anatomical features of the other image, such as at a sub-pixel/sub-voxel level. The determined optimal translation can be used to update the first marker in the first image or the second marker in the second image such that the first and second markers correspond in the first and second images. In some embodiments, for the purpose of translation, the transformations of the automatic image registration algorithm can be optimised for translations. Any known registration algorithms can be employed in this way.

In some embodiments, the translation of the first image under the marker (at block 204 of Figure 2) can be at least partially based on a received user input. The user input may be received via one or more user interfaces 104, which may be one or more user interfaces of the apparatus 100, one or more user interfaces external to the apparatus 100, or a combination of both. The user input may, for example, involve the user pressing a button (or key) or performing a gesture (such as dragging or swiping) on the one or more user interfaces 104 to translate the first image under the first marker.

Although not illustrated in Figure 2, the method may further comprise translating the second image under the second marker to adjust the position of the second marker with respect to the feature of the anatomical structure in the second image to correspond to the position of the first marker with respect to the feature of the anatomical structure in the first image. In this way, the underlying second image is modified by the translation, rather than the position of the second marker itself. The second marker remains fixed. Thus, in some embodiments, a single one of the images may be translated and, in other embodiments, more than one of the images (for example, both of the first and second images) may be translated.

The translation of the second image may be performed simultaneously with the translation of the first image, prior to the translation of the first image or subsequent to the translation of the first image (at block 204 of Figure 2). It will be understood that the earlier description of the translation of the first image also applies to the second image and thus it will not be repeated here. In other words, it is possible to translate the second image under the second marker in any of the manners described earlier in respect of the first image. The translation of the second image under the second marker can be useful where the anatomical structure in the second image is smeared. For example, in the case of three-dimensional images, an anatomical structure of voxel width may be positioned in a single voxel (with a voxel intensity x) or it may be positioned across two adjacent voxels (with a voxel intensity of x/2) in which case it will appear smeared to the user. Thus, the second image may be translated under the second marker to improve the sharpness of the second image.

Although also not illustrated in Figure 2, the method may further comprise rotating the first image under the first marker to alter the orientation of the anatomical structure in the first image to correspond to the orientation of the anatomical structure in the second image. Thus, the underlying first image is modified by the rotation, rather than the position of the first marker itself. The first marker remains fixed. As described earlier with respect to the translation of the first image, the first image can be rotated continuously under the first marker, rotated under the first marker in a plurality of steps, or a combination of continuously and in a plurality of steps under the first marker. The rotation of the first image can be in any plane. For example, rotating the first image may comprise any one or more of rotating the first image in an axial plane, rotating the first image in a coronal plane, rotating the first image in a sagittal plane, or rotating the first image in any other plane, or in any combination of planes.

In some embodiments, the rotation of the first image under the first marker can be performed automatically by the processor 102 of the apparatus 100. For example, an automatic image registration algorithm can be employed. In some embodiments, for example, an automatic image registration algorithm may be applied to the first image and the second image (or one or more sub-images of those images, where the sub-images show the local environment around the position of a marker). An optimal rotation can then be determined by comparing the first image and second image (or by mapping one of the images to the other). The optimal rotation is a rotation that, when applied to one of the images, makes the rotated image and the other image most similar. The determined optimal rotation can be used to update the first marker in the first image or the second marker in the second image such that the first and second markers correspond in the first and second images. In some embodiments, for the purpose of rotation, the transformations of the automatic image registration algorithm can be optimised for rotations. Any known registration algorithms can be employed in this way.

In some embodiments, the rotation of the first image under the first marker can be at least partially based on a received user input. The user input may be received via one or more user interfaces 104, which may be one or more user interfaces of the apparatus 100, one or more user interfaces external to the apparatus 100, or a combination of both.

In some embodiments, rotating the first image can comprise an interpolation of the first image. The interpolation of the first image to rotate the first image under the first marker can comprise any suitable interpolation technique such as those mentioned earlier in respect of the translation of the first image. In the embodiments in which the first image is rotated under the first marker in a plurality of steps, the interpolation of the first image may be performed after each rotation of the first image.

In the same way as described above for the first image (which will not be repeated here but will be understood to apply), the second image may alternatively or in addition be rotated under the second marker to alter the orientation of the anatomical structure in the second image to correspond to the orientation of the anatomical structure in the first image. For example, the anatomical structures in the underlying images can be rotated relative to each other.

The rotation of the second image may be performed simultaneously with the rotation of the first image, prior to the rotation of the first image or subsequent to the rotation of the first image. Similarly, the rotation of any one or more of the first image and the second image may be performed simultaneously with the translation of any one or more of the first image and the second image, prior to the translation of any one or more of the first image and the second image, or subsequent to the translation of any one or more of the first image and the second image (at block 204 of Figure 2).

Specifically, in some embodiments, the first image may first be rotated under the first marker and then the first image may subsequently be translated under the first marker or vice versa. Alternatively, in some embodiments, the second image may first be rotated under the second marker and then the second image may subsequently be translated under the second marker or vice versa.

Alternatively, in some embodiments, the first image may first be rotated under the first marker (or, alternatively, the second image may first be rotated under the second image) and then the first and the second image may subsequently be translated under their respective markers (for example, the first image and the second image may be translated simultaneously under their respective markers, or the first image may be translated under the first marker followed by the second image being translated under the second marker or vice versa). Alternatively, in some embodiments, the first image may first be translated under the first marker (or, alternatively, the second image may first be translated under the second image) and then the first and the second image may subsequently be rotated under their respective markers (for example, the first image and the second image may be rotated simultaneously under their respective markers, or the first image may be rotated under the first marker followed by the second image being rotated under the second marker or vice versa).

Alternatively, in some embodiments, the first image and the second image may first be translated under their respective markers (for example, the first image and the second image may first be translated simultaneously under their respective markers, or the first image may be translated under the first marker followed by the second image being translated under the second marker or vice versa) and then the first image may subsequently be rotated under the first marker (or, alternatively, the second image may subsequently be rotated under the second marker). Alternatively, in some embodiments, the first image and the second image may first be rotated under their respective markers (for example, the first image and the second image may first be rotated simultaneously under their respective markers, or the first image may be rotated under the first marker followed by the second image being rotated under the second marker or vice versa) and then the first image may subsequently be translated under the first marker (or, alternatively, the second image may subsequently be translated under the second marker).

Alternatively, in some embodiments, the first image and the second image may first be translated under their respective markers (for example, the first image and the second image may first be translated simultaneously under their respective markers, or the first image may be translated under the first marker followed by the second image being translated under the second marker or vice versa) and then the first image and the second image may subsequently be rotated under their respective markers (for example, the first image and the second image may first be rotated simultaneously under their respective markers, or the first image may be rotated under the first marker followed by the second image being rotated under the second marker or vice versa). Alternatively, in some embodiments, the first image and the second image may first be rotated under their respective markers (for example, the first image and the second image may first be rotated simultaneously under their respective markers, or the first image may be rotated under the first marker followed by the second image being rotated under the second marker or vice versa) and then the first image and the second image may subsequently be translated under their respective markers (for example, the first image and the second image may first be translated simultaneously under their respective markers, or the first image may be translated under the first marker followed by the second image being translated under the second marker or vice versa).

In some embodiments, the rotation of the second image under the marker can be performed automatically by the processor 102 of the apparatus 100, as described earlier in respect of the first image. In some embodiments, the rotation of the second image under the second marker can be at least partially based on a received user input. The user input may be received via one or more user interfaces 104, which may be one or more user interfaces of the apparatus 100, one or more user interfaces external to the apparatus 100, or a combination of both.

In embodiments in which the first image and the second image comprise a plurality of views of the anatomical structure (such as the views described earlier), the method disclosed herein may be performed for one or more of the plurality of views. In any of the embodiments described herein, the translation and, optionally, the rotation steps described earlier may be repeated for one or more of the images until the markers in the images with respect to the feature of the anatomical structures appear as similar as possible. In embodiments in which the translation is performed in a plurality of steps, the translation may be repeated with reduced step sizes for the translations. Similarly, in embodiments in which the rotation is performed in a plurality of steps, the rotation may be repeated with reduced step sizes for the rotations.

Although not illustrated in Figure 2, the method further comprise storing the translated (and optionally rotated) first image with the first marker and the second image with second marker. Alternatively or in addition, although also not illustrated in Figure 2, the method further comprise rendering (or outputting or displaying) the translated (and optionally rotated) first image with the first marker and the second image with second marker. In the embodiments in which the first image and the second image comprise a plurality of views, the views in respect of which a translation (and optionally a rotation) is performed can be updated to render (or output or display) the translated (and optionally rotated) image for that view.

In some embodiments, once the position of the first marker with respect to the feature in the first image corresponds to the position of the second marker with respect to the feature in the second image (which may be by one or multiple translations), the overall translation of the first image may be determined. In these embodiments, the determined overall translation may be rendered (or output or displayed) at the position of the first marker in the first image. Similarly, in embodiments where the second image is translated, the overall translation of the second image may be determined. In these embodiments, the determined overall translation may be rendered (or output or displayed) at the position of the second marker in the second image. In embodiments in which an image is also rotated, the overall rotation of that image may be determined and rendered (or output or displayed) at the position of the marker in the image.

In this way, by positioning the marker over the image and translating (or shifting) the image under the marker in the manner described above, a high precision pair of markers can be generated over the images. It will be understood that, although the method is described herein with respect to positioning markers over corresponding features in two images, the method may also be performed in respect of more than two images in the same way.

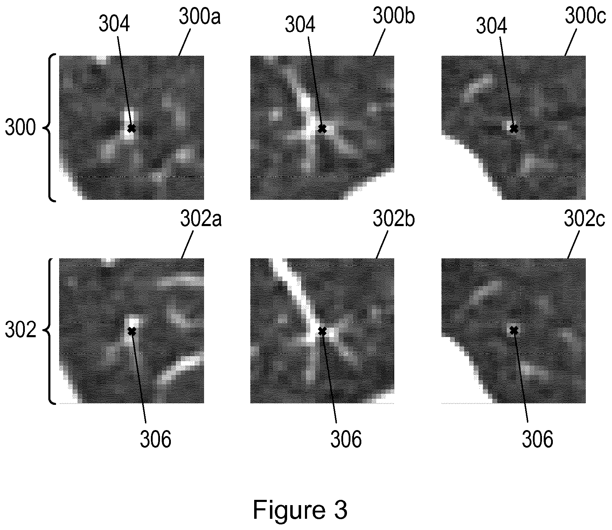

Figure 3 is an illustration of markers 304, 306 in images 300, 302 of an anatomical structure according to such an embodiment in which the images 300, 302 comprise a plurality of views 300a, 300b, 300c, 302a, 302b, 302c of the anatomical structure.

In this illustrated example, the first image 300 comprises an axial view 300a of the anatomical structure, a coronal view 300b of the anatomical structure, and a sagittal view 300c of the anatomical structure. Similarly, in this illustrated example, the second image 302 comprises an axial view 302a of the anatomical structure, a coronal view 302b of the anatomical structure, and a sagittal view 302c of the anatomical structure. As illustrated in Figure 3, a user interface 106 displays the two images 300, 302 in six orthogonal views, with the axial view 300a, coronal view 300b, and sagittal view 300c of the first image 300 in an upper row and the corresponding axial view 302a, coronal view 302b, and sagittal view 302c of the second image 302 in a lower row. In some embodiments, the user may scroll through a dataset for each image 300, 302 until the anatomical structure that is of interest is displayed in each of the views 300a, 300b, 300c, 302a, 302b, 302c. In the illustrated example of Figure 3, the anatomical structure of interest is a vessel bifurcation. However, it will be understood that the described method can apply to any other anatomical structure.

As described earlier with reference to block 202 of Figure 2, a first marker 304 is positioned over a feature of the anatomical structure in the first image 300 and a second marker 306 is positioned over the same feature of the anatomical structure in the second image 302. In this illustrated example, the first marker 304 is positioned over the feature of the anatomical structure in each of the axial view 300a of the anatomical structure, the coronal view 300b of the anatomical structure, and the sagittal view 300c of the anatomical structure in the first image 300. Similarly, in this illustrated example, the second marker 306 is positioned over the same feature of the anatomical structure in each of the axial view 302a of the anatomical structure, the coronal view 302b of the anatomical structure, and the sagittal view 302c of the anatomical structure in the second image 302.

As illustrated in Figure 3, the axial views 300a, 302a and the sagittal views 300c, 302c indicate that the first marker 304 in the first image 300 is not positioned at exactly the same location with respect to the feature of the anatomical structure as the second marker 306 in the second image 302. Thus, as described earlier with reference to block 204 of Figure 2, the first image 300 is translated under the first marker 304 to adjust the position of the first marker 304 with respect to the feature of the anatomical structure in the first image 300 to correspond to the position of the second marker 306 with respect to the feature of the anatomical structure in the second image 302. In this illustrated example, the translation can be performed in respect of any one or more of the axial views 300a, 302a of the anatomical structure, the coronal views 300b, 302b of the anatomical structure, and the sagittal views 300c, 302c of the anatomical structure.

It will be understood that any one or more of the first image 300 and the second image 302 may be translated (and optionally rotated) in any of the manners described earlier, which will not be repeated here but will be understood to apply.

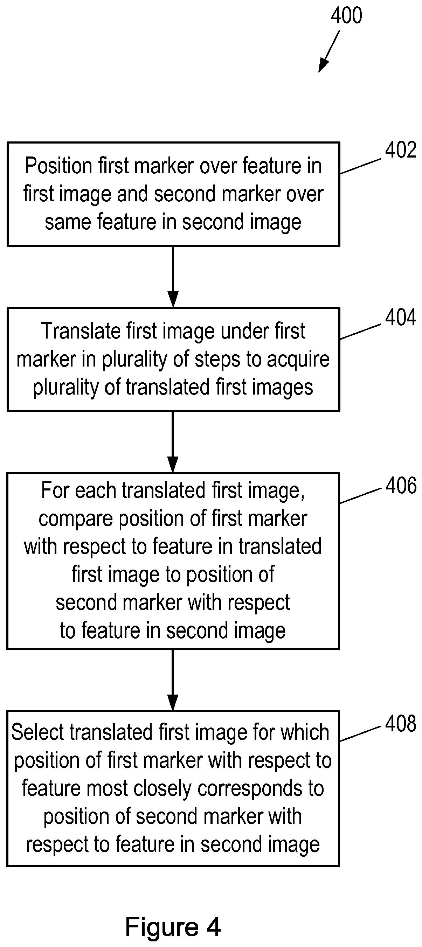

Figure 4 illustrates a method 400 for positioning markers in images of an anatomical structure according to another embodiment. The illustrated method 400 can generally be performed by or under the control of the processor 102 of the apparatus 100. Although not repeated in full here, it will be understood that the description with regard to the translation and the rotation of images provided earlier in respect of Figure 2 also applies in respect of Figure 4.

With reference to Figure 4, at block 402 (as described above with respect to block 202 of Figure 2), a first marker is positioned over a feature of an anatomical structure in a first image and a second marker is positioned over the same feature of the anatomical structure in a second image.

At block 404 of Figure 4 (as described above with respect to block 204 of Figure 2), the first image is translated under the first marker to adjust the position of the first marker with respect to the feature of the anatomical structure in the first image to correspond to the position of the second marker with respect to the feature of the anatomical structure in the second image. Specifically, in the illustrated embodiment of Figure 4, the first image is translated under the first marker in a plurality of steps to acquire a plurality of translated first images.

Then, at block 406 of Figure 4, for each of the plurality of translated first images, the position of the first marker with respect to the feature of the anatomical structure in the translated first image is compared to the position of the second marker with respect to the feature of the anatomical structure in the second image. The comparison may, for example, comprise iteratively checking the similarity between the positions of the markers with respect to the feature of the anatomical structure in the images on the pixel grid in the case of two-dimensional images or a voxel grid in the case of three-dimensional images.

In some embodiments, the comparison can be performed automatically by the processor 102 of the apparatus 100. For example, in some embodiments, the comparison can be performed using a similarity measure. Specifically, the first image and the second image (or at least a part of the first image and a corresponding part of the second image) can be compared to each other using a similarity measure. The similarity measure may, for example, comprise a sum of squared differences, a cross correlation (such as a local cross correlation), mutual information, or any other similarity measure. The comparison using a similarity measure can be performed using any of the known techniques. In some embodiments, the comparison may comprise displaying the plurality of translated first images to a user via a user interface 104 and acquiring a user input from the user interface 104 related to the comparison. The user input may be received via one or more user interfaces 104, which may be one or more user interfaces of the apparatus 100, one or more user interfaces external to the apparatus 100, or a combination of both.

At block 408 of Figure 4, a translated first image is selected from the plurality of translated first images for which the position of the first marker with respect to the feature of the anatomical structure most closely corresponds (or is most similar) to the position of the second marker with respect to the feature of the anatomical structure in the second image. In embodiments where the comparison is performed automatically by the processor 102 of the apparatus 100, the selection of a translated first image may also be performed automatically by the processor 102 of the apparatus 100. For example, an optimal similarity value may be determined based on values acquired from the similarity measure described earlier and the most appropriate translated first image can be selected based on the optimal similarity value. In embodiments where the comparison comprises displaying the plurality of translated first images to a user, the user input acquired from the user interface 104 may provide the selection of a translated first image. The translated first image that is selected may be the image that best corresponds to the second image compared to the others images in the plurality of translated first images. In this way, the most appropriate image can be selected.

In the same manner described for the translation of the first image with respect to Figure 4, it will be understood that a translation of the second image may be performed in the same way and, although not repeated here, the description of the translation in respect of blocks 404, 406, and 408 of Figure 4 will be understood to apply to the translation of the second image. Also, the first image and optionally the second image may be translated in any of the manners described earlier in respect of Figure 2 and, although not repeated here, the description of the translation in respect of Figure 2 will be understood to apply to Figure 4. The translation of the second image may be performed simultaneously with the translation of the first image, prior to the translation of the first image, or subsequent to the translation of the first image.

It will also be understood that the first image, the second image, or both the first and second images may be rotated in the manner described earlier in respect of Figure 2 and thus, although not repeated here, the description of the rotation in respect of Figure 2 will be understood to apply to Figure 4. In respect of Figure 4, the rotation of an image may be performed in the same manner as the translation of that image as described with reference to blocks 404, 406, and 408 of Figure 4. The rotation of the second image may be performed simultaneously with the rotation of the first image, prior to the rotation of the first image, or subsequent to the rotation of the first image.

Similarly, the rotation of any one or more of the first image and the second image may be performed simultaneously with the translation of any one or more of the first image and the second image, prior to the translation of any one or more of the first image and the second image, or subsequent to the translation of any one or more of the first image and the second image (as described earlier).

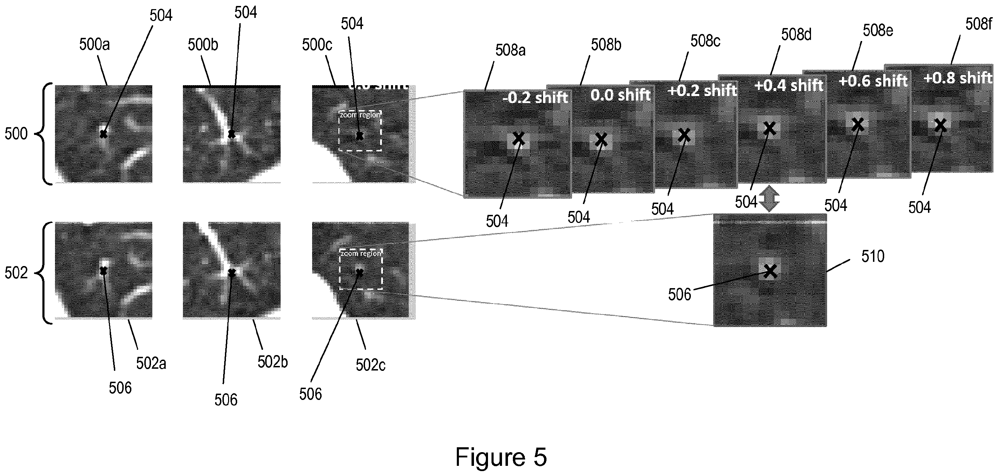

Figure 5 is an illustration of markers 504, 506 in images 500, 502 of an anatomical structure according to such an embodiment in which the first image 500 is translated under the first marker 504 in a plurality of steps.

In this illustrated example, the first image 500 and the second image 502 comprise a plurality of views 500a, 500b, 500c, 502a, 502b, 502c. Specifically, the first image 500 comprises an axial view 500a of the anatomical structure, a coronal view 500b of the anatomical structure, and a sagittal view 500c of the anatomical structure and, similarly, the second image 502 comprises an axial view 502a of the anatomical structure, a coronal view 502b of the anatomical structure, and a sagittal view 502c of the anatomical structure. As described earlier in respect of block 402 of Figure 4, a first marker 504 is positioned over a feature of an anatomical structure in the first image 500 and a second marker 506 is positioned over the same feature of the anatomical structure in the second image 502.

In this illustrated example, the first marker 504 is positioned over the feature of the anatomical structure in each of the axial view 500a of the anatomical structure, the coronal view 500b of the anatomical structure, and the sagittal view 500c of the anatomical structure in the first image 500. Similarly, in this illustrated example, the second marker 506 is positioned over the same feature of the anatomical structure in each of the axial view 502a of the anatomical structure, the coronal view 502b of the anatomical structure, and the sagittal view 502c of the anatomical structure in the second image 502.

Then, as described earlier in respect of block 404 of Figure 4, in this illustrated example, the sagittal view 500c of the first image 500 of the anatomical structure is translated under the first marker 504 in a plurality of steps to acquire a plurality of translated first images 508a, 508b, 508c, 508d, 508e, 508f. As described above with reference to block 406 of Figure 4, for each of the plurality of translated first images 508a, 508b, 508c, 508d, 508e, 508f, the position of the first marker 504 with respect to the feature of the anatomical structure in the translated first image 500 is compared to the position of the second marker 506 with respect to the feature of the anatomical structure in the second image 502. In this illustrated example, the second image 502 is zoomed-up on the feature of the anatomical structure with the second marker to produce a zoomed-up version 510 of the second image 502 for the purpose of the comparison. The plurality of translated first images 508a, 508b, 508c, 508d, 508e, 508f may also be zoomed-up for the purpose of the comparison. As illustrated in Figure 4, each of the plurality of translated first images 508a, 508b, 508c, 508d, 508e, 508f is translated by a different fraction of a voxel.

As described earlier with respect to block 408 of Figure 4, a translated first image is selected from the plurality of translated first images 508a, 508b, 508c, 508d, 508e, 508f for which the position of the first marker 504 with respect to the feature of the anatomical structure most closely corresponds (or is most similar) to the position of the second marker 506 with respect to the feature of the anatomical structure in the second image 502. Thus, in this illustrated example, the translated first image 508d is selected. The translated first image 508d corresponds to the first image 500 translated by +0.4 of a voxel.

Although the illustrated example has been described in relation to the sagittal view 500c of the first image 500, it will be understood that the method may alternatively or in addition be performed for any of the other views of the first image 500, any of the views of the second image 502, and any combination of views.

It will be understood that, while the methods have been described herein in respect of two images, the methods can equally be performed for more than two images.

There is therefore provided an improved method and apparatus for positioning markers in images of an anatomical structure. The method and apparatus described herein can be used for positioning markers in images of any anatomical structure (for example, organs or any other anatomical structure). Specifically, the method and apparatus allows markers to be positioned over corresponding features in different images with high precision. The method and apparatus can be valuable in medical imaging analysis and visualisation tools.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention.

It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

## Claims

1. A method (200, 400) for positioning markers in images of an anatomical structure, the method comprising:
positioning (202, 402) a first marker over a feature of an anatomical structure in a first image and a second marker over the same feature of the anatomical structure in a second image; and
translating (204, 404) the first image under the first marker to adjust the position of the first marker with respect to the feature of the anatomical structure in the first image to correspond to the position of the second marker with respect to the feature of the anatomical structure in the second image wherein the underlying first image is translated rather than the position of the first marker which remains fixed..

2. A method as claimed in any one of the preceding claims, wherein translating the first image comprises an interpolation of the first image.

3. A method as claimed in any one of claims 1 or 2, wherein translating the first image comprises any one or more of:
translating the first image in a left-right direction;
translating the first image in an anterior-posterior direction; and
translating the first image in an inferior-superior direction.

4. A method as claimed in any one of the preceding claims, wherein:
the first image is a two-dimensional image comprising a plurality of pixels and translating the first image comprises translating the first image by part of a pixel; or
the first image is a three-dimensional image comprising a plurality of voxels and translating the first image comprises translating the first image by part of a voxel.

5. A method as claimed in any one of the preceding claims, wherein the first image is translated continuously under the first marker.

6. A method as claimed in any one of claims 1 to 4, wherein the first image is translated under the first marker in a plurality of steps.

7. A method as claimed in claim 6, wherein translating the first image under the first marker comprises:
translating (404) the first image under the first marker in the plurality of steps to acquire a plurality of translated first images;
for each of the plurality of translated first images, comparing (406) the position of the first marker with respect to the feature of the anatomical structure in the translated first image to the position of the second marker with respect to the feature of the anatomical structure in the second image; and
selecting (408) a translated first image from the plurality of translated first images for which the position of the first marker with respect to the feature of the anatomical structure most closely corresponds to the position of the second marker with respect to the feature of the anatomical structure in the second image.

8. A method as claimed in any one of the preceding claims, wherein one or more of the positioning of the first marker and the translation of the first image under the marker is at least partially based on a received user input.

9. A method as claimed in any one of the preceding claims, the method further comprising:
translating the second image under the second marker to adjust the position of the second marker with respect to the feature of the anatomical structure in the second image to correspond to the position of the first marker with respect to the feature of the anatomical structure in the first image.

10. A method as claimed in any one of the preceding claims, the method further comprising:
rotating the first image under the first marker to alter the orientation of the anatomical structure in the first image to correspond to the orientation of the anatomical structure in the second image.

11. A method as claimed in any one of the preceding claims, wherein each of the first image and the second image comprises a plurality of views of the anatomical structure and the method of any one of clams 1 to 10 is performed for one or more of the plurality of views of the anatomical structure.

12. A method as claimed in claim 11, wherein the plurality of views of the anatomical structure comprises any one or more of:
an axial view of the anatomical structure;
a coronal view of the anatomical structure; and
a sagittal view of the anatomical structure.

13. A computer program product comprising a computer readable medium, the computer readable medium having computer readable code embodied therein, the computer readable code being configured such that, on execution by a suitable computer or processor, the computer or processor is caused to perform the method of any one of claims 1-12.

14. An apparatus (100) for positioning markers in images of an anatomical structure, the apparatus comprising:
a processor (102) configured to:
position a first marker over a feature of an anatomical structure in a first image and a second marker over the same feature of the anatomical structure in a second image; and
translate the first image under the first marker to adjust the position of the first marker with respect to the feature of the anatomical structure in the first image to correspond to the position of the second marker with respect to the feature of the anatomical structure in the second image, wherein the underlying first image is translated rather than the position of the first marker which remains fixed.

15. An apparatus (100) as claimed in claim 14, wherein the processor (102) is configured to:
control a user interface (104) to render the translated first image with the first marker and the second image with second marker; and/or
control a memory (106) to store the translated first image with the first marker and the second image with second marker.

## Patentansprüche

1. Verfahren (200, 400) zum Positionieren von Markierungen in Bildern einer anatomischen Struktur, wobei das Verfahren umfasst:
Positionieren (202, 402) einer ersten Markierung über einem Merkmal einer anatomischen Struktur in einem ersten Bild und einer zweiten Markierung über demselben Merkmal der anatomischen Struktur in einem zweiten Bild; und
Verschieben (204, 404) des ersten Bilds unter der ersten Markierung, um die Position der ersten Markierung in Bezug auf das Merkmal der anatomischen Struktur in dem ersten Bild so anzupassen, dass sie der Position der zweiten Markierung in Bezug auf das Merkmal der anatomischen Struktur in dem zweiten Bild entspricht, wobei das darunterliegende erste Bild verschoben wird und nicht die Position der ersten Markierung, die fest bleibt.

2. Verfahren nach einem der vorstehenden Ansprüche, wobei Verschieben des ersten Bilds eine Interpolation des ersten Bilds umfasst.

3. Verfahren nach einem der Ansprüche 1 oder 2, wobei Verschieben des ersten Bilds eines oder mehrere der Folgenden umfasst:
Verschieben des ersten Bilds in einer Links-Rechts-Richtung;
Verschieben des ersten Bilds in einer anterior-posterioren Richtung; und
Verschieben des ersten Bilds in einer inferior-superioren Richtung.

4. Verfahren nach einem der vorstehenden Ansprüche, wobei:
das erste Bild ein zweidimensionales Bild ist, das eine Vielzahl von Pixeln umfasst, und Verschieben des ersten Bilds Verschieben des ersten Bilds um einen Teil eines Pixels umfasst; oder
das erste Bild ein dreidimensionales Bild ist, das eine Vielzahl von Voxeln umfasst, und Verschieben des ersten Bilds Verschieben des ersten Bildes um einen Teil eines Voxels umfasst.

5. Verfahren nach einem der vorstehenden Ansprüche, wobei das erste Bild kontinuierlich unter der ersten Markierung verschoben wird.

6. Verfahren nach einem der Ansprüche 1 bis 4, wobei das erste Bild in einer Vielzahl von Schritten unter der ersten Markierung verschoben wird.

7. Verfahren nach Anspruch 6, wobei Verschieben des ersten Bilds unter der ersten Markierung umfasst:
Verschieben (404) des ersten Bilds unter der ersten Markierung in der Vielzahl von Schritten, um eine Vielzahl von verschobenen ersten Bildern zu erhalten;
für jedes der Vielzahl von verschobenen ersten Bildern, Vergleichen (406) der Position der ersten Markierung in Bezug auf das Merkmal der anatomischen Struktur in dem verschobenen ersten Bild mit der Position der zweiten Markierung in Bezug auf das Merkmal der anatomischen Struktur in dem zweiten Bild; und
Auswählen (408) eines verschobenen ersten Bilds aus der Vielzahl von verschobenen ersten Bildern, bei dem die Position der ersten Markierung in Bezug auf das Merkmal der anatomischen Struktur am ehesten der Position der zweiten Markierung in Bezug auf das Merkmal der anatomischen Struktur in dem zweiten Bild entspricht.

8. Verfahren nach einem der vorstehenden Ansprüche, wobei eines oder mehrere der Positionierung der ersten Markierung und der Verschiebung des ersten Bilds unter der Markierung mindestens teilweise auf einer empfangenen Benutzereingabe basiert.

9. Verfahren nach einem der vorstehenden Ansprüche, wobei das Verfahren weiter umfasst:
Verschieben des zweiten Bilds unter der zweiten Markierung, um die Position der zweiten Markierung in Bezug auf das Merkmal der anatomischen Struktur in dem zweiten Bild so anzupassen, dass sie der Position der ersten Markierung in Bezug auf das Merkmal der anatomischen Struktur in dem ersten Bild entspricht.

10. Verfahren nach einem der vorstehenden Ansprüche, wobei das Verfahren weiter umfasst:
Drehen des ersten Bilds unter der ersten Markierung, um die Ausrichtung der anatomischen Struktur in dem ersten Bild so zu ändern, dass sie der Ausrichtung der anatomischen Struktur in dem zweiten Bild entspricht.

11. Verfahren nach einem der vorstehenden Ansprüche, wobei jedes von dem ersten Bild und dem zweiten Bild eine Vielzahl von Ansichten der anatomischen Struktur umfasst und das Verfahren nach einem der Ansprüche 1 bis 10 für eine oder mehrere der Vielzahl von Ansichten der anatomischen Struktur durchgeführt wird.

12. Verfahren nach Anspruch 11, wobei die Vielzahl von Ansichten der anatomischen Struktur eine oder mehrere beliebige der Folgenden umfasst:
eine axiale Ansicht der anatomischen Struktur;
eine koronare Ansicht der anatomischen Struktur; und
eine sagittale Ansicht der anatomischen Struktur.

13. Computerprogrammprodukt, das ein computerlesbares Medium umfasst, wobei das computerlesbare Medium einen darin aufgenommenen computerlesbaren Code aufweist, wobei der computerlesbare Code so konfiguriert ist, dass bei Ausführung durch einen geeigneten Computer oder Prozessor der Computer oder Prozessor dazu veranlasst wird, das Verfahren nach einem der Ansprüche 1-12 durchzuführen.

14. Einrichtung (100) zum Positionieren von Markierungen in Bildern einer anatomischen Struktur, wobei die Einrichtung umfasst:
einen Prozessor (102), der dazu konfiguriert ist:
eine erste Markierung über einem Merkmal einer anatomischen Struktur in einem ersten Bild und einer zweiten Markierung über demselben Merkmal der anatomischen Struktur in einem zweiten Bild zu positionieren; und
das erste Bild unter der ersten Markierung zu verschieben, um die Position der ersten Markierung in Bezug auf das Merkmal der anatomischen Struktur in dem ersten Bild so anzupassen, dass sie der Position der zweiten Markierung in Bezug auf das Merkmal der anatomischen Struktur in dem zweiten Bild entspricht, wobei das darunterliegende erste Bild verschoben wird und nicht die Position der ersten Markierung, die fest bleibt.

15. Einrichtung (100) nach Anspruch 14, wobei der Prozessor (102) dazu konfiguriert ist:
eine Benutzeroberfläche (104) zu steuern, das verschobene erste Bild mit der ersten Markierung und das zweite Bild mit der zweiten Markierung wiederzugeben; und/oder
einen Speicher (106) zu steuern, das verschobene erste Bild mit der ersten Markierung und das zweite Bild mit der zweiten Markierung zu speichern.

## Revendications

1. Procédé (200, 400) de positionnement de marqueurs dans des images d'une structure anatomique, le procédé comprenant :
le positionnement (202, 402) d'un premier marqueur sur une caractéristique d'une structure anatomique dans une première image et d'un second marqueur sur la même caractéristique de la structure anatomique dans une seconde image ; et
la translation (204, 404) de la première image sous le premier marqueur pour ajuster la position du premier marqueur par rapport à la caractéristique de la structure anatomique dans la première image afin qu'elle corresponde à la position du second marqueur par rapport à la caractéristique de la structure anatomique dans la seconde image, dans lequel la première image sous-jacente est translatée plutôt que la position du premier marqueur qui reste fixe.

2. Procédé selon l'une quelconque des revendications précédentes, dans lequel la translation de la première image comprend une interpolation de la première image.

3. Procédé selon l'une quelconque des revendications 1 ou 2, dans lequel la translation de la première image comprend une quelconque ou plusieurs :
de la translation de la première image dans une direction gauche-droite ;
de la translation de la première image dans une direction antérieure-postérieure ; et
de la translation de la première image dans une direction inférieure-supérieure.

4. Procédé selon l'une quelconque des revendications précédentes, dans lequel :
la première image est une image bidimensionnelle comprenant une pluralité de pixels et la translation de la première image comprend la translation de la première image par une partie d'un pixel ; ou
la première image est une image tridimensionnelle comprenant une pluralité de voxels et la translation de la première image comprend la translation de la première image par une partie d'un voxel.

5. Procédé selon l'une quelconque des revendications précédentes, dans lequel la première image est translatée en continu sous le premier marqueur.

6. Procédé selon l'une quelconque des revendications 1 à 4, dans lequel la première image est translatée sous le premier marqueur dans une pluralité d'étapes.

7. Procédé selon la revendication 6, dans lequel la translation de la première image sous le premier marqueur comprend :
la translation (404) de la première image sous le premier marqueur dans la pluralité d'étapes pour acquérir une pluralité de premières images translatées ;
pour chaque première image translatée de la pluralité de premières images translatées, la comparaison (406) de la position du premier marqueur par rapport à la caractéristique de la structure anatomique dans la première image translatée à la position du second marqueur par rapport à la caractéristique de la structure anatomique dans la seconde image ; et
la sélection (408) d'une première image translatée parmi la pluralité de premières images translatées pour lesquelles la position du premier marqueur par rapport à la caractéristique de la structure anatomique correspond le plus étroitement à la position du second marqueur par rapport à la caractéristique de la structure anatomique dans la seconde image.

8. Procédé selon l'une quelconque des revendications précédentes, dans lequel un ou plusieurs du positionnement du premier marqueur et de la translation de la première image sous le marqueur sont au moins partiellement basés sur une entrée utilisateur reçue.

9. Procédé selon l'une quelconque des revendications précédentes, le procédé comprenant en outre :
la translation de la seconde image sous le second marqueur pour ajuster la position du second marqueur par rapport à la caractéristique de la structure anatomique dans la seconde image pour correspondre à la position du premier marqueur par rapport à la caractéristique de la structure anatomique dans la première image.

10. Procédé selon l'une quelconque des revendications précédentes, le procédé comprenant en outre :
la rotation de la première image sous le premier marqueur pour modifier l'orientation de la structure anatomique dans la première image afin qu'elle corresponde à l'orientation de la structure anatomique dans la seconde image.

11. Procédé selon l'une quelconque des revendications précédentes, dans lequel chacune de la première image et de la seconde image comprend une pluralité de vues de la structure anatomique et le procédé selon l'une quelconque des revendications 1 à 10 est réalisé pour une ou plusieurs vues de la pluralité de vues de la structure anatomique.

12. Procédé selon la revendication 11, dans lequel la pluralité de vues de la structure anatomique comprend une quelconque ou plusieurs :
d'une vue axiale de la structure anatomique ;
d'une vue coronale de la structure anatomique ; et
d'une vue sagittale de la structure anatomique.

13. Produit de programme informatique comprenant un support lisible par ordinateur, le support lisible par ordinateur présentant un code lisible par ordinateur incorporé dans celui-ci, le code lisible par ordinateur étant configuré de sorte que, lors de son exécution par un ordinateur, ou un processeur, approprié, l'ordinateur, ou le processeur, soit amené à réaliser le procédé selon l'une quelconque des revendications 1-12.

14. Appareil (100) pour positionner des marqueurs dans des images d'une structure anatomique, l'appareil comprenant :
un processeur (102) configuré pour :
positionner un premier marqueur sur une caractéristique d'une structure anatomique dans une première image et un second marqueur sur la même caractéristique de la structure anatomique dans une seconde image ; et
translater la première image sous le premier marqueur pour ajuster la position du premier marqueur par rapport à la caractéristique de la structure anatomique dans la première image afin qu'elle correspondre à la position du second marqueur par rapport à la caractéristique de la structure anatomique dans la seconde image, dans lequel la première image sous-jacente est translatée plutôt que la position du premier marqueur qui reste fixe.

15. Appareil (100) selon la revendication 14, dans lequel le processeur (102) est configuré pour :
commander une interface utilisateur (104) pour qu'elle restitue la première image translatée avec le premier marqueur et la seconde image avec le second marqueur ; et/ou
commander une mémoire (106) pour qu'elle enregistre la première image translatée avec le premier marqueur et la seconde image avec le second marqueur.
